# EUROPEAN PATENT APPLICATION

(11) **EP 2 068 063 A2**
(43) Date of publication of application: **10.06.2009**
(21) Application number: 08019948.2
(22) Date of filing: 14.11.2008
(51) Int. Cl.: F16L 3/22, F16L 3/26, F16L 55/035

(54) **Multiple tube clip**

(30) Priority: 03.12.2007 US 949102
(71) Applicant: International Engine Intellectual Property Company, LLC., Warrenville, IL 60555 (US)
(72) Inventor: Faied, Louai, Rochester hills MI 48309 (US)
(74) Representative: Kuhnen & Wacker

(57) **Abstract**

A tube clip (10) includes an isolator (16) having at least one channel (18) configured for receiving a tube and a clip body (14) encapsulating the isolator in at least one plane. At least one of the channels (18) of the isolator is out-of-plane with a plane formed by at least two other channels. A clip end (12) extends from the clip body (14).

## Description

### FIELD OF THE INVENTION

The present invention relates generally to a clip for tubing, and more particularly, to a clip for attaching tubing to vehicle components.

### BACKGROUND OF THE INVENTION

Typically, brake, HVAC, and other types of tubing are installed using tube clips, especially in motor vehicles. A piece of hydraulic tubing is secured with tube clips at a number of discrete points to reduce the vibrations to the tubing. This vibration can otherwise lead to damage to the tubing, either by fatigue failure, or by causing the tubing to bump against nearby components, which can eventually wear through the tubing. Thus, if a tube clip is installed improperly or broken, and consequently falls out of its mounting bracket or surface, the tubing is at risk due to the unconstrained vibration in the area of the bracket. This unconstrained vibration allows the tubing to repeatedly bump against the bracket itself and can lead to tubing failure.

To efficiently attach tubes to the vehicle, multiple tubes are clipped together. The conventional multiple clip or "triple clip" is an elongate member with a clip end and a clip body. The clip body has a plurality of channels in a linear row, and the clip end extends generally linearly from the clip body. When the clip end is attached to the vehicle, the clips are cantilevered on the clip body, which creates a torque force on the clip. The clip can fail as a result of the torque force. Further, the triple clip has a tendency to apply too much force on the tube located at the end, and not enough force on the tube located closest to the mounting hole.

Additionally, tubing frequently has to be run through congested areas of the engine or chassis where clipping surfaces are scarce. When a clipping surface is present, there frequently is not enough space to accommodate the generally elongate shape of the clips. When adequate space is not available, the tubes are often extensively rerouted to a location that can accommodate the clips.

### SUMMARY OF THE INVENTION

A tube clip includes an isolator having at least one channel configured for receiving a tube and a clip body encapsulating the isolator in at least one plane. At least one of the channels of the isolator is out of plane with a plane formed by at least two other channels. A clip end extends from the clip body.

### BRIEF DESCRIPTION OF THE DRAWINGS

FIG. 1 is a front view of a prior art triple clip.

FIG. 2 is a front view of a multiple tube clip in accordance with the invention.

FIG. 3 is a front perspective view of the multiple tube clip in accordance with the invention.

### DESCRIPTION OF A PREFERRED EMBODIMENT

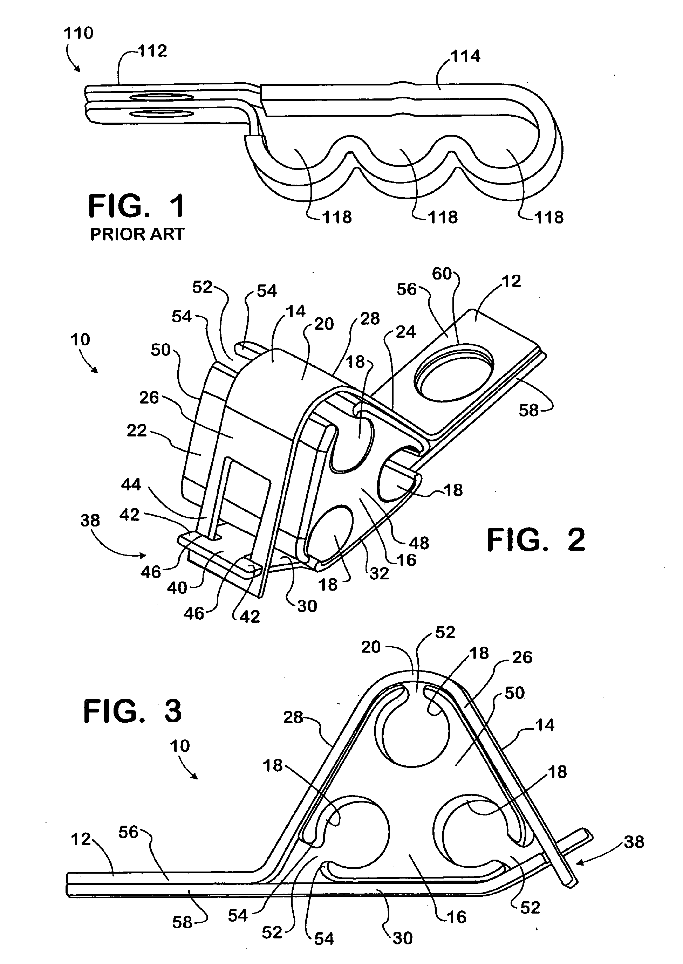

Referring to FIG. 2 through FIG. 3, a tube clip for multiple tubes is indicated generally at 10, and includes a generally planar clip end 12 and a generally triangular clip body 14. The clip body 14 is disposed around an isolator 16 having three channels 18 configured to receive tubes (not shown) in a staggered arrangement.

The tube clip 10 has a smaller, more compact configuration than the prior art "triple clip" 110 shown in FIG. 1, which has a generally linear clip end 112 and a generally linear clip body 114. The clip body 114 has a plurality of channels 118 in a row, and the clip end 112 extends generally linearly from the clip body. In contrast to the triple clip 110, the tube clip 10 holds the tubes in a generally stacked and staggered configuration. In other words, at least one of the channels 18 of the isolator 16 is out-of-plane with a plane formed by at least two other channels. This configuration allows the length of the clip body 14 to be shortened, and the reduction of moment arm force on the clip end 12.

The clip body 12 has an angled head 20 extending over a first surface 22 and a second surface 24 of the isolator 16 with a first leg 26 and a second leg 28, respectively, and a base 30 extending along a third surface 32 of the isolator. Advantageously, the clip body 12 is stamped from sheet metal, however other materials are contemplated.

At the proximal end of the base 30 and the proximal end of the head 20 is a hinge, indicated generally at 38. The base 30 has a male hinge 40 with two prongs 42 that engage a female hinge 44 on the head 20, and the female hinge is disposed into a slot 46 on the male hinge, although other hinges 38 are contemplated. The hinge 38 permits the relative motion of the head 20 with respect to the base.

Disposed between the head 20 and the base 30 is the isolator 16. The isolator 16 is generally triangular-shaped in cross-section, and extends between a first perpendicular surface 48 and a second perpendicular surface 50. The first and second perpendicular surfaces 48, 50 are generally normal to the first, second and third surfaces 22, 24, 32. The plurality of channels 18 extend from the first perpendicular surface 48 to the second perpendicular surface 50 at the corners of the isolator 16. The channels 18 have an opening 52 along the length of the channel, advantageously at the corners of the isolator 16, which are formed between two lips 54 to permit the placement and removal of the tubes in the channels. While the tube clip 10 is configured for three round tubes of equal size, it is contemplated that the clip can be configured for different numbers, shapes and sizes of tubes.

The isolator 16 is made of a resilient material, such as rubber, to allow the parting of the lips 54 for placement and removal of the tube. Further, the resilient material can accommodate variations in tube sizing. When the tube is received in the channel 18, the lips substantially encapsulate the tube to maintain the tube in the isolator 16.

To attach the isolator 16 to the vehicle and to prevent the tubes from exiting the isolator, the clip body 14 extends around the isolator. The clip body 14 encapsulates the isolator 16 in a plane generally transverse to the longitudinal axis of the channels 18. The clip body 14 compresses the isolator 16 and encloses the channel opening 52 to harness and isolate the tubes in a tight package.

A first clip arm 56 and a second clip arm 58 are generally planar and co-extend in a flush arrangement to form the clip end 12. Advantageously, the first clip arm 56 and the head 20 are integrally formed, and the second clip arm 58 and the base 30 are integrally formed, although other constructions are contemplated. Each clip arm 56, 58 has a mounting hole 60 that is configured for receiving a fastener (not shown) for attaching the clip 10 to the vehicle. The clip end 12 has a length that is less than the length of the clip head 14.

In use, the first clip arm 56 and the head 20 are rotated open about the hinge 38 to rotate the first clip arm 56 with respect to the bottom clip arm 58. With the channel openings 52 exposed, the user applies pressure to the tubes generally normally with respect to the longitudinal access of the channel 18 and against the lips 54, which resiliently open and close around the tubes. Then, the head 20 and the first clip arm 56 are rotated about the hinge 38 to flushly engage the first clip arm with the second clip arm 58. Alternatively, the second clip arm 58 or both arms 56, 58 can be rotated about the hinge 38. When the top and bottom clip arms 56, 58 are engaged, the isolator 16 is compressed between the head 20 and the base 30 of the clip body 14. With the mounting holes 60 in the first and second clip arms 56, 58 aligned, the fastener (not shown) is introduced into the hole and into the vehicle to fasten the clip to the vehicle.

Since the tube clip 10 shortens the distance between the tubes and the mounting hole 60, there is less torque force applied and the stiffness of the clip 10 is increased. Further, the resilient isolator 16 sufficiently holds the tubes in place. The tight packing of the tubes and the stiffer design enhances the structural integrity of the tube clip, which decreases cost and increases reliability in the overall assembly of the vehicle.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A tube clip comprising:
an isolator having a plurality of channels configured for receiving a tube, wherein at least one of the channels is out of plane with a plane formed by at least two channels;
a clip body encapsulating the isolator in at least one plane; and
a clip end extending from the clip body.

2. The tube clip of claim 1 wherein the isolator is made from a resilient, compressible material.

3. The tube clip of claim 1 wherein the isolator has a generally triangular-shape in cross-section, and the at least one channel is disposed at a corner of the triangular shape.

4. The tube clip of claim 1 wherein the at least one channel has an opening formed between two resilient lips that are configured to permit the placement and the removal of the tube into and from the isolator.

5. The tube clip of claim 1 wherein the clip body is configured to compress the isolator around the tube.

6. The tube clip of claim 1 wherein the clip body further comprises a base with a proximal end, and a head with a proximal end, wherein the base and the head are connected at a hinge at their respective proximal ends and the hinge is configured to pivot the head with respect to the base.

7. The tube clip of claim 6 wherein the clip end further comprises a first clip arm and a bottom clip arm that extend generally parallel to each other from the clip body.

8. The tube clip of claim 6 wherein the head has a first leg and a second leg angled from the first leg.

9. The tube clip of claim 7 wherein the base is attached to or integral with the first clip arm, and the base is attached to or integral with the bottom clip arm.

10. The tube clip of claim 1 wherein the clip end includes a hole configured for receiving a fastener.

11. A tube clip comprising:
a generally triangular-shaped isolator having at least one channel configured for receiving a tube;
a clip body having a head configured to contact a first surface and a second surface of the isolator, and a base configured to contact a third surface of the isolator, wherein the head and the base are connected with a hinge; and
wherein the head is configured to pivot with respect to the base to permit the placement and removal of the tube into and out of the isolator.

12. The tube clip of claim 11 further comprising a clip end extending generally parallel from the base of the clip body.

13. The tube clip of claim 11 further comprising a clip end having a first clip arm attached to or integral with the head, and a second clip arm attached to or integral with the base.

14. The tube clip of claim 11 wherein at least one channel is disposed at a corner of the isolator.

15. The tube clip of claim 11 wherein the at least one channel has an opening formed between two resilient lips of the isolator that are configured to permit the placement and removal of the tube into and out of the isolator.

16. The tube clip of claim 11 wherein the clip body is configured to compress the isolator.

17. The tube clip of claim 11 wherein the head has a first leg and a second leg angled from the first leg.

18. The tube clip of claim 11 wherein the clip end has a length that is shorter than the length of the clip body.

19. The tube clip of claim 11 wherein the isolator has three channels generally parallel to each other that are staggered along the length of the clip body.

20. A tube clip comprising:
an isolator having a generally triangular-shape in cross-section, and having a channel disposed at each corner of the triangular shape;
a clip body having a head configured to contact a first surface and a second surface of the isolator, and a base configured to contact a third surface of the isolator; and
a clip end having a first clip arm attached to or integral with the head, and a second clip arm attached to or integral with the base;
wherein the head and the base are connected with a hinge and are configured to compress the isolator as the head is rotated towards the base.
